# EUROPÄISCHE PATENTANMELDUNG

(11) **EP 4 309 843 A1**
(43) Veröffentlichungstag der Anmeldung: **24.01.2024**
(21) Anmeldenummer: 23182181.0
(22) Anmeldetag: 28.06.2023
(51) Int. Cl.: B24B 9/00, B23B 41/12, B24B 27/00, B24B 33/02, B24B 33/08, B24B 41/00, B24D 5/06, B23B 51/10, B23P 13/00, B24D 13/02

(54) **KOMBINATIONSWERKZEUG UND FEINBEARBEITUNGSVERFAHREN ZUM HONEN UND ENTGRATEN EINER BOHRUNG**

(30) Priorität: 21.07.2022 DE 102022207496
(71) Anmelder: Nagel Maschinen- und Werkzeugfabrik GmbH, 72622 Nürtingen (DE)
(72) Erfinder: Hodza, Erkan, 72622 Nürtingen (DE); Weiblen, Joachim, 72555 Metzingen (DE)
(74) Vertreter: Patentanwälte Ruff, Wilhelm, Beier, Dauster & Partner mbB

(57) **Zusammenfassung**

Ein Kombinationswerkzeug zum Honen und Entgraten einer Bohrung, insbesondere zum Honen und Entgraten eines Pleuelauges in einem Pleuel, umfasst einen Werkzeugkörper (110), der eine Werkzeugachse (112) definiert, Kupplungsstrukturen (120) zur Ankopplung des Werkzeugkörpers an eine Arbeitsspindel oder ein Antriebselement einer Bearbeitungsmaschine, wobei die Kupplungsstrukturen an einem spindelseitigen Ende des Werkzeugkörpers (110) angeordnet sind, eine in dem Werkzeugkörper (110) parallel zur Werkzeugachse (112) verlaufenden Führungsöffnung zur Aufnahme und Führung eines parallel zur Werkzeugachse (112) verschiebbaren Zustellelements und einen Honabschnitt (130) mit mehreren von der Führungsöffnung radial zur Werkzeugachse (112) durchgehenden Durchbrechungen zur Aufnahme jeweils einer Honleisteneinheit (180), die mit dem Zustellelement (190) in Wirkverbindung steht und durch axiale Verschiebung des Zustellelements (190) radial zur Werkzeugachse (112) zustellbar ist Weiterhin ist mindestens ein gegenüber dem Honabschnitt axial versetzt angeordneter Entgratabschnitt (200) vorgesehen, in dem ein Schneidsegment oder mehrere über den Umfang des Kombinationswerkzeugs verteilte Schneidsegmente (220) angeordnet sind, wobei ein Schneidsegment individuell beweglich und radial zur Werkzeugachse (112) federnd gelagert ist. Im Entgratabschnitt (200) ist für jedes Schneidsegment im Werkzeugkörper (110) eine individuelle Aufnahmetasche (230) mit einer der Führungsöffnung (114) zugewandten Bodenfläche (255) und Seitenflächen (222) ausgebildet. Jedes der Schneidsegmente ist in einer individuellen Aufnahmetasche (230) im Werkzeugkörper (110) aufgenommen.

## Beschreibung

Die Erfindung betrifft ein Kombinationswerkzeug zum Honen und Entgraten einer Bohrung. Die Erfindung betrifft auch ein mehrstufiges Feinbearbeitungsverfahren zum Honen und Entgraten einer Bohrung. Das Feinbearbeitungsverfahren kann unter Verwendung mindestens eines erfindungsgemäßen Kombinationswerkzeugs durchgeführt werden. Ein bevorzugtes Anwendungsgebiet ist die Bearbeitung eines Pleuelauges in einem Pleuel durch Honen und Entgraten.

Die Bearbeitung von Pleuelaugen in Pleueln gehört zu den typischen Anwendungsfeldern des Honens. Die Pleuelaugen sind Bohrungen, die im Betrieb als Gleitlager für Zapfen oder Bolzen dienen. Sie müssen im Betrieb die auf die Lagerung wirkenden äußeren Kräfte dauerhaft ohne substanziellen Verschleiß übertragen können. Die Honbearbeitung schafft hierfür die Voraussetzungen.

Beim Honen von Pleuelaugen entsteht jedoch in der Regel an den Enden der Bohrung, d.h. am Übergang zwischen der Bohrung und einer Außenfläche des Pleuels, im Bereich einer Fase ein Grat, welcher die Funktionalität des Pleuels bzw. der mit dem Pleuel ausgestatteten Brennkraftmaschine einschränken kann.

Das Dokument DE 10 2011 004 618 A1 beschreibt Probleme, die durch Hongrate entstehen können. Ein Hongrat kann, falls er sich im Betrieb löst, zu einem Schaden der Brennkraftmaschine führen. Daher ist das Entgraten eines Pleuelauges einer Pleuelstange heute ein wichtiger Teilprozess bei der Fertigung von Pleueln. Das Dokument beschreibt einen Prozess, bei dem nach dem Fertighonen eines Innendurchmessers des Pleuelauges und nach dem Fertigschleifen der Pleuelstange auf ihre Solldicke die Pleuelstange in eine Vorrichtung eingespannt und mithilfe eines rotierenden Bürstwerkzeugs durch Bürsten entgratet wird.

Es gibt auch bereits Kombinationswerkzeuge, die genutzt werden können, um ohne Werkzeugwechsel eine Bohrung zu honen und zu entgraten.

Die Patentschrift US 5,417,525 beschreibt ein Kombinationswerkzeug, das dafür ausgelegt ist, Grate am austrittsseitigen Ende einer Bohrung zu beseitigen, die mittels Dornhonen (single path honing) bearbeitet werden. Dazu ist eine gesonderte Baugruppe vorgesehen, die am spindelfernen Ende des Werkzeugkörpers mittels einer zentralen Befestigungsschraube am Werkzeugkörper befestigt werden kann. Die abnehmbare Baugruppe weist mehrere federbelastete Schneiden auf, die nach Abschluss der Honoperation beim Zurückziehen des Honwerkzeugs die Grate am austrittsseitigen Ende der Bohrung beseitigen können.

Aus der EP 1 319 467 B1 ist ein Kombinationswerkzeug zur Bearbeitung einer Bohrung bekannt, welches ein Honwerkzeug und ein in einem axialen Abstand zum Honwerkzeug angeordnetes Entgratwerkzeug umfasst. Das Entgratwerkzeug hat einen Entgratring, an dem die Entgratelemente angeordnet sind. Der Entgratring ist in radialer Richtung beweglich gelagert. Dadurch soll es möglich sein, einen Achsversatz zwischen Entgratwerkzeug und Bohrung auszugleichen.

### AUFGABE UND LÖSUNG

Vor diesem Hintergrund ist es eine Aufgabe der Erfindung, ein Kombinationswerkzeug zum Honen und Entgraten einer Bohrung bereitzustellen, welches funktionssicher arbeitet, einen relativ einfachen und robusten Aufbau hat sowie gut zu fertigen und relativ einfach zu montieren und demontieren ist. Weiterhin ist es eine Aufgabe, ein Feinbearbeitungsverfahren zum Honen und Entgraten einer Bohrung bereitzustellen, das mit kurzen Taktzeiten realisierbar ist.

Zur Lösung dieser Aufgabe stellt die Erfindung ein Kombinationswerkzeug mit den Merkmalen von Anspruch 1 bereit. Weiterhin wird ein Feinbearbeitungsverfahren mit den Merkmalen von Anspruch 12 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das Kombinationswerkzeug hat einen langgestreckten Werkzeugkörper, der eine Werkzeugachse definiert. An einem spindelseitigen Ende des Werkzeugkörpers sind Kupplungsstrukturen zur Ankopplung des Werkzeugkörpers an einer Arbeitsspindel oder ein Antriebselement einer Bearbeitungsmaschine angeordnet. Damit kann über die Bewegung der Arbeitsspindel das Kombinationswerkzeug für die Bearbeitung parallel zu seiner Werkzeugachse in der Bohrung bewegt und gleichzeitig um die Werkzeugachse gedreht werden.

In dem Werkzeugkörper ist eine parallel zur Werkzeugachse verlaufende Führungsöffnung zur Aufnahme und Führung eines parallel zur Werkzeugachse verschiebbaren Zustellelements ausgebildet.

Das Kombinationswerkzeug hat einen Honabschnitt mit mehreren von der Führungsöffnung radial zur Werkzeugachse nach außen durchgehenden Durchbrechungen zur Aufnahme jeweils einer Honleisteneinheit, die mit dem Zustellelement in Wirkverbindung steht und durch axiale Verschiebung des Zustellelements radial zur Werkzeugachse zustellbar ist. Somit kann der wirksame Durchmesser für die Honbearbeitung durch Betätigung des Zustellelements eingestellt werden. Die Honleisteneinheiten haben an ihren Außenseiten jeweils wenigstens einen abrasiven Schneidbelag mit Schneidkörnern, die in einer Bindung gebunden sind.

Das Kombinationswerkzeug weist weiterhin wenigstens einen Entgratabschnitt auf, der axial gegenüber dem Honabschnitt versetzt angeordnet ist. In dem Entgratabschnitt ist mindestens ein Schneidsegment angeordnet, das individuell beweglich und radial zur Werkzeugachse federnd gelagert ist. Ein Schneidsegment weist an seiner radialen Außenseite für einen Materialabtrag ausgebildete Strukturen zum Entgraten eines Randes der Bohrung auf. Bei dem Schneidsegment handelt es sich um ein passives Element, das nicht aktiv in Radialrichtung zugestellt wird, sondern seine Bearbeitungskraft beim Beseitigen eines Grats u.a. aus der Federkraft der federnden Lagerung bezieht.

Obwohl ein einziges Schneidsegment ausreichen kann, sind vorzugsweise in dem Entgratabschnitt mehrere über den Umfang des Werkzeugkörpers verteilte Schneidsegmente angeordnet, die jeweils individuell beweglich und radial zur Werkzeugachse federnd gelagert sind. Dadurch kann eine besonders gleichmäßige Bearbeitung über den gesamten Umfang gefördert werden, insbesondere auch bei ungeführten Kombinationswerkzeugen. Es können z.B. zwei, drei, vier, fünf oder sechs Schneidsegmente vorgesehen sein. Die Schneidsegmente können ungleichmäßig oder gleichmäßig über den Umfang verteilt sein. Vorzugsweise sind die Schneidsegmente untereinander gleich, also nominell identisch ausgebildet, was u.a. die Fertigung kostengünstig gestaltet.

Gemäß einer Formulierung der Erfindung ist im Entgratabschnitt für jedes der Schneidsegmente im Werkzeugkörper eine individuelle Aufnahmetasche mit einer der Führungsöffnung zugewandten Bodenfläche und Seitenflächen ausgebildet und jedes der Schneidsegmente ist in einer individuellen Aufnahmetasche im Werkzeugkörper aufgenommen. Es gibt also eine oder mehrere Aufnahmetaschen im Entgratabschnitt.

Der Begriff "Entgratabschnitt" beschreibt hier einen Abschnitt des Kombinationswerkzeugs, in welchem die Komponenten für die Entgratfunktion untergebracht sind. Der Entgratabschnitt erstreckt sich über eine gewisse axiale Länge, diese ist vorzugsweise kleiner als die axiale Länge des Honabschnitts, z.B. nur maximal halb so lang. Ein Entgratabschnitt ist vorzugsweise unmittelbar anschließend an den zugeordneten Honabschnitt angeordnet, so dass es zwischen Honabschnitt und Entgratabschnitt keinen weiteren Werkzeugabschnitt gibt, in welchem am Werkzeugkörper für die Feinbearbeitung der Bohrung relevante Einrichtungen angebracht sind.

Der Begriff "Aufnahmetasche" beschreibt hier eine Aussparung bzw. eine Vertiefung im Material des Werkzeugkörpers. Die Aufnahmetasche ist nach radial außen geöffnet und nach radial innen mit der Bodenfläche teilweise oder vollständig geschlossen. Solche Aufnahmetaschen können beispielsweise durch Fräsen oder Senkerodieren in den Werkzeugkörper eingebracht werden. Diese Art der Gestaltung des Werkzeugkörpers zur Aufnahme von Schneidsegmenten trägt u.a. dem Umstand Rechnung, dass im Inneren des Werkzeugkörpers die axiale Führungsöffnung verläuft. Diese kann auf voller Länge genutzt werden, da die mit der Bodenfläche der Aufnahmetasche mit Abstand radial außerhalb der Führungsöffnung liegen kann. Zwischen der Führungsöffnung und dem Boden einer Aufnahmetasche kann somit ein radialer Abstand bestehen, so dass das Werkzeugkörpermaterial in Radialrichtung eine Art Zwischenwand zwischen Führungsöffnung und Aufnahmetasche bildet.

Funktionsrelevante Innenflächen und Innendimensionen einer Aufnahmetasche können so an funktionsrelevante Außenflächen und Außendimensionen eines aufzunehmenden Schneidsegments angepasst sein, dass die Aufnahmetasche auch als Führung erwünschter Bewegungen des Schneidsegments dienen kann.

Bei manchen Ausführungsformen sind zwei in Umfangsrichtung des Werkzeugkörpers gegenüberliegende Seitenflächen der Aufnahmetasche als Führungsflächen für eine Radialbewegung des Schneidsegments ausgelegt. An dem Schneidsegment sind an gegenüberliegenden Seiten zwei korrespondierende Führungsflächen ausgebildet. Eine lichte Weite zwischen den parallel zueinander ausgerichteten Führungsflächen der Aufnahmetasche entspricht dabei im Wesentlichen einer zwischen den korrespondierenden Führungsflächen des Schneidsegments gemessenen Breite des Schneidsegments. Dadurch kann erreicht werden, dass das Schneidsegment in Umfangsrichtung im Wesentlichen spielfrei oder mit sehr geringem Spiel in der Aufnahmetasche gehalten wird, aber radial beweglich bleibt. Bei der Radialbewegung gleiten dann die einander zugeordneten Führungsflächen jeweils aneinander ab, Bewegungen des Schneidsegments in Umfangsrichtung werden blockiert.

Bei manchen Ausführungsformen kann es sein, dass das Schneidsegment ausschließlich radial beweglich sein soll, also weder in Axialrichtung noch in Umfangsrichtung. Dies wird bei manchen Ausführungsformen dadurch erreicht, dass zwei in Axialrichtung des Werkzeugkörpers gegenüberliegende Seitenflächen der Aufnahmetasche als Führungsflächen für eine Radialbewegung des Schneidsegments ausgelegt sind, an dem Schneidsegment an gegenüberliegenden Seiten zwei korrespondierende Führungsflächen ausgebildet sind und eine zwischen den Führungsflächen der Aufnahme gemessene lichte Weite der Aufnahme im Wesentlichen der zwischen den Führungsflächen des Schneidsegments gemessenen Länge des Schneidsegments entspricht. Dann ist durch die senkrecht zur Werkzeugachse verlaufenden Führungsflächen eine Axialbewegung des Schneidsegments unterbunden, so dass die Axialbewegung blockiert bleibt und das Schneidsegment lediglich radial beweglich ist.

Es kann auch sein, dass eine axiale Länge der Aufnahmetasche größer ist als die axiale Länge des aufgenommenen Schneidsegments, so dass das Schneidsegment innerhalb der Aufnahme nicht nur radial, sondern auch axial (parallel zur Werkzeugachse) beweglich ist. Hier kann durch entsprechende Dimensionierung ein erlaubter Verschiebungsweg vorgegeben werden, dieser kann beispielsweise in der Größenordnung einiger Zehntel Millimeter bis 1 oder 2 mm liegen. Eine gewisse axiale Beweglichkeit kann sich günstig auf die Gleichmäßigkeit der Verteilung von Andrückkräften beim Entgraten und damit auf die Bearbeitungsqualität auswirken.

Um die erforderliche Federbelastung bzw. Vorspannung in Radialrichtung zu erzielen, ist bei manchen Ausführungsformen mindestens eine in Radialrichtung wirkende Feder zum Erzeugen einer in Radialrichtung nach außen auf das Schneidsegment wirkenden Federkraft vorgesehen, wobei vorzugsweise zwischen der Bodenfläche der Aufnahmetasche und dem Schneidsegment mindestens eine Druckfeder, beispielsweise eine Schraubendruckfeder, vorgesehen ist. Vorzugsweise sind mehrere Druckfedern, beispielsweise zwei, vorgesehen. Anstelle einer Schraubendruckfeder kann auch eine Blattfeder oder eine andere Feder vorgesehen sein. Statt metallischer Federn sind eventuell auch andere elastisch nachgiebige bzw. federnde Elemente denkbar, z.B. Gummipuffer und/oder andere elastisch nachgiebige Elemente aus einem Elastomer. Auch diese können als Federn im Sinne der Anmeldung dienen, um Schneidsegmente federnd zu lagern.

Um ein Ausweichen der Feder beim Bewegen des Schneidsegments zu vermeiden und um die Montage zu vereinfachen, ist bei manchen Ausführungsformen vorgesehen, dass an einer der radialen Außenseite abgewandten Unterseite eines Schneidsegments wenigstens eine sacklochförmige Federaufnahme zur Aufnahme einer Schraubendruckfeder ausgebildet ist. Vorzugsweise sind mehrere, beispielsweise zwei Federaufnahmen vorgesehen. Die Bereitstellung mehrerer Federn ist günstig für eine möglichst gleichmäßige Federwirkung ohne störende Kippkräfte. Alternativ oder zusätzlich können sacklochförmigen Federaufnahmen auch im Werkzeugkörper vorgesehen sein.

Die Schneidsegmente stellen beweglich am Werkzeugkörper angebrachte Funktionselemente dar. Diese sollten möglichst gegen unbeabsichtigtes Lösen vom Werkzeugkörper gesichert sein. Vorzugsweise ist für diesen Zweck jeder Aufnahmetasche wenigstens ein an dem Werkzeugkörper lösbar befestigbares Sicherungselement zur Sicherung eines in der Aufnahmetasche aufgenommenen Schneidsegments gegen Herausfallen zugeordnet.

Eine besonders einfach zu realisierende und funktionssichere Lösung ist dann gegeben, wenn das Sicherungselement als Halteplatte ausgebildet ist, die einen Rahmen bildet, welcher eine Durchlassöffnung für einen Außenabschnitt des Schneidsegments umschließt. In dem Rahmen können eine oder mehrere Durchgangsöffnungen zum Durchführen einer Befestigungsschraube angeordnet sein.

Ein Schneidsegment kann in einem bodennahen Bereich einen Führungsabschnitt mit seitlichen Führungsflächen zur Führung von Bewegungen in der Aufnahmetasche und einen im Querschnitt schmaleren Außenabschnitt aufweisen, der an einer dem Boden abgewandten Außenseite die materialabtragenden Strukturen zum Entgraten aufweist, wobei der Führungsabschnitt unter Bildung einer Stufe in den Außenabschnitt übergeht. Die Stufe kann dann als Anschlag an den Rahmen der Halteplatte dienen, wobei der Führungsabschnitt durch die Durchlassöffnung der Halteplatte durchgreift, so dass die Schneidfläche außerhalb der Halteplatte liegt.

Vorzugsweise sind die Innendimensionen der Durchlassöffnung in der Halteplatte etwas größer als die Außendimensionen des Außenabschnitts des Schneidsegments, so dass zwischen Schneidsegment und Halteplatte ein kleiner Spalt verbleibt und die Radialbewegung des Schneidsegments nicht durch großflächigen Kontakt mit der Halteplatte behindert wird.

Bei anderen Ausführungsformen wird die Sicherung nicht durch eine radial aufgesetzte Halteplatte für jede Aufnahmetasche erreicht, sondern durch mindestens eine, vorzugsweise zwei ringförmig umlaufende Rückholfedern, die vorzugsweise im Werkzeugkörper Umfangsnuten eingesetzt sind und an den Schneidsegmenten angreifen. Eine Rückholfeder ist ein Sicherungselement, welches mehreren Schneidsegmenten zugeordnet sein kann, so dass zwei, drei, vier oder mehr Schneidsegmente ein oder zwei oder ggf mehr gemeinsame Sicherungselemente haben können.

Die Anzahl der Schneidsegmente kann der Bearbeitungsaufgabe angepasst sein. Beispielsweise können ein, zwei, drei, vier, fünf oder sechs Schneidsegmente vorgesehen sein, die jeweils einen Umfangswinkelbereich abdecken können. Besonders gute Ergebnisse lassen sich nach den Erfahrungen der Erfinder dann erzielen, wenn drei oder vier gleichmäßig um den Umfang verteilte Schneidsegmente vorgesehen sind. Der von einem Schneidsegment abgedeckte Umfangsbereich kann relativ groß sein, er kann z.B. im Bereich von 30° bis 60° liegen.

Bei bevorzugten Ausführungsformen weisen die Schneidsegmente an ihrer Außenseite Schneidflächen mit geometrisch unbestimmten Schneiden auf. Die Schneidflächen können dazu einen Schneidbelag aufweisen, der abrasive Körner in einer festen Bindung enthält. Insbesondere kann es sich um Schneidkörner aus kubischem Bornitrid (CBN) oder Diamant handeln, die in einer galvanisch aufgebrachten Bindung gebunden sind. Dadurch sind im Vergleich zu Entgratwerkzeugen mit geometrisch bestimmten Schneiden erheblich höhere Standzeiten erzielbar. Außerdem hat sich gezeigt, dass die Qualität des entgrateten Abschnitts am Bohrungsrand über den gesamten Umfang sehr gleichmäßig wird, wenn mit geometrisch unbestimmten Schneiden entgratet wird.

Entgratwerkzeuge gemäß der beanspruchten Erfindung können jedoch auch Schneidsegmente mit materialabtragenden Strukturen in Form von geometrisch bestimmten Schneiden aufweisen. Beispielsweise können dazu Schneidsegmente mit Wendeschneidplatten vorgesehen sein. Bei Nutzung von Schneidsegmenten mit geometrisch bestimmten Schneiden kann es sinnvoll sein, besondere Maßnahmen gegen die Gefahr von Rattern und dadurch gegen die Erzeugung von Rattermarken zu treffen.

Vorzugsweise ist vorgesehen, dass die Schneidsegmente an ihren radialen Außenseiten wenigstens eine in Umfangsrichtung gekrümmte und schräg zur Werkzeugachse orientierte Schneidfläche mit geometrisch unbestimmten Schneiden aufweisen, wobei sich daran eine im Wesentlichen zylindrisch gekrümmte, vorzugsweise nicht schneidende Führungsfläche anschließt. Ein Schneidsegment kann auch auf beiden Seiten der zylindrisch gekrümmten Führungsfläche jeweils eine kegelstumpfsegmentförmig gekrümmte Schneidfläche mit entsprechendem Schneidbelag aufweisen.

Das Schneidsegment kann so weit nach radial innen eintauchen, dass vor oder nach einer Entgratoperation der abrasive Abschnitt innerhalb der Bohrung liegt und das Schneidsegment nur mit der nicht schneidenden Führungsfläche mit der Bohrungsinnenwand in Kontakt steht. Dadurch können Schäden an der bereits gehonten Bohrungsinnenfläche vermieden werden.

Das Kombinationswerkzeug kann einen (spindelseitigen) Entgratabschnitt aufweisen, der bei Ausführungsformen mit spindelseitigem Führungsabschnitt zwischen dem Führungsabschnitt und dem Honabschnitt angeordnet ist. Bei angekoppeltem Kombinationswerkzeug ist der spindelseitige Entgratabschnitt an der der Arbeitsspindel zugewandten Seite des Honabschnitts angeordnet.

Mithilfe eines solchen Kombinationswerkzeugs können z.B. Pleuel während eines Fertigungsschritts sowohl durch Honen bearbeitet als auch am Übergang zu der eintrittsseitigen Planfläche entgratet werden. Zum Entgraten wird das Kombinationswerkzeug so weit in die Bohrung eingeführt, bis die Schneidflächen der Schneidsegmente in Eingriff mit dem eintrittsseitigen Rand der Bohrung geraten und bei weiterem Vorschub des Honwerkzeugs gegen die Federkraft ihrer Lagerung nach radial innen gedrückt werden. Mittels einer Drehung des Kombinationswerkzeugs, gegebenenfalls in Verbindung mit einer leichten axialen Verlagerung, werden die Schneidsegmente mit geeigneter Anpresskraft an den Bohrungsrand angedrückt und die Grate am eintrittsseitigen Bohrungsrand werden zuverlässig entfernt. Danach kann das Honwerkzeug aus der Bohrung zurückgezogen werden.

Alternativ oder zusätzlich kann ein Kombinationswerkzeug einen spindelfernen Entgratabschnitt aufweisen. Dieser ist dann zwischen dem Honabschnitt und dem freien Ende des Honwerkzeugs angeordnet.

Mithilfe eines solchen Kombinationswerkzeugs können z.B. Pleuel während eines Fertigungsschritts sowohl durch Honen bearbeitet als auch am Übergang zu der austrittsseitigen Planfläche entgratet werden.

Es gibt Ausführungsbeispiele, bei denen auf jeder axialen Seite des Honabschnitts ein Entgratabschnitt vorgesehen ist, so dass vorzugsweise zwei axial zueinander versetzte Entgratabschnitte vorhanden sind.

Es gibt auch Ausführungsbeispiele, die nur genau einen Entgratabschnitt aufweisen, der an der spindelzugewandten oder der spindelabgewandten Seite des Honabschnitts angeordnet sein kann.

Bei bevorzugten Ausführungsformen weist das Kombinationswerkzeug einen zwischen Kupplungsstruktur und Honabschnitt angeordneten spindelseitigen Führungsabschnitt zur Führung des Werkzeugkörpers in einer mit Abstand vor der Eintrittsseite der Bohrung angeordneten Führung einer Werkstückhaltevorrichtung auf. Das Werkstück selbst, beispielsweise das Pleuel, kann schwimmend gelagert sein, so dass sich durch eine Ausgleichsbewegung des Werkstücks die Bohrung des Werkstücks am Werkzeug ausrichten kann.

Der Führungsabschnitt des Kombinationswerkzeugs kann eine in Umfangsrichtung geschlossene zylindrische Mantelfläche zur Führung des Kombinationswerkzeugs in einer oberen Werkzeugführung und/oder in der Bohrung aufweisen. Bei bevorzugten Ausführungsformen weist der Führungsabschnitt jedoch mehrere über den Umfang verteilte, parallel zur Werkzeugachse verlaufende Längsnuten auf. Dadurch kann einerseits ohne Beeinträchtigung der Führungsfunktion das Gewicht bzw. die träge Masse des Kombinationswerkzeugs reduziert werden, was eine höhere Dynamik bei der Bearbeitung zulässt. Andererseits können die Längsnuten Strömungskanäle für Kühlschmierstoff bilden, mit dem auch der Bereich des Entgratabschnitts gespült und somit von Bearbeitungsrückständen wie Spänen usw. befreit werden kann. Dadurch kann verhindert werden, dass sich Spalte im Bereich des Entgratabschnitts mit Abrieb zusetzen und dadurch die Funktion beeinträchtigt werden könnte.

Bei bevorzugten Ausführungsformen ist zwischen dem Honabschnitt und dem spindelfernen Ende des Kombinationswerkzeugs ein Einführhilfsabschnitt angeordnet, in welchen mehrere über den Umfang des Einführhilfsabschnitts verteilte Führungselemente angeordnet sind, die an einer spindelabgewandten Seite eine schräg zur Werkzeugachse geneigte Führungsfläche aufweisen, wobei die Führungsflächen auf einer gemeinsamen, zum spindelfernen Ende sich verjüngenden Konusfläche liegen. Die Führungselemente können z.B. aus Hartmetall oder einem anderen verschleißresistenten Werkstoff bestehen.

Vorzugsweise weist der Einführhilfsabschnitt einen gesondert vom Werkzeugkörper gefertigten Träger auf, der z.B. nach Art eines Rings gestaltet sein kann und die Führungselemente trägt, wobei der Träger lösbar am Werkzeugkörper befestigbar ist. Damit wird die gesamte Baugruppe leicht auswechselbar, so dass nicht das gesamte Kombinationswerkzeug aufbereitet werden muss, wenn die Führungselemente nach einer Vielzahl von Operationen verschlissen sind.

Die Erfindung betrifft auch ein Feinbearbeitungsverfahren zum Honen und Entgraten einer Bohrung. Das mehrstufige Verfahren kann insbesondere zum Honen und Entgraten eines Pleuelauges in einem Pleuel genutzt werden, gegebenenfalls aber auch bei anderen Werkstücken genutzt werden, zum Beispiel zur Bearbeitung von Bohrungen in Zahnrädern.

Die Feinbearbeitung derartiger Bohrungen erfolgt üblicherweise in mehreren, aufeinanderfolgenden Feinbearbeitungsoperationen. Eine vorzugsweise vorgesehene Vorbearbeitung der Bohrung in einer Vorbearbeitungsoperation kann dazu genutzt werden, die gewünschte Position und Winkellage der Bohrung festzulegen. Das kann beispielsweise mithilfe des Feinbohrens (Feinspindeln) oder des Reibens oder auch mittels Schrupphonen erfolgen, also durch ein Honverfahren mit hohen Spanleistungen.

Die hier interessierenden Feinbearbeitungsoperationen werden nach der Vorbearbeitung durchgeführt, um die Anforderungen insbesondere bezüglich Zylinderform, Durchmesser und Oberflächenstruktur zu erfüllen. Dazu werden mehrere unterschiedliche aufeinanderfolgende Honoperationen durchgeführt. Dazu gehört das Vorhonen der vorbearbeiteten Bohrung in mindestens einer Vorhonoperation zur Erzeugung einer vorgehonten Bohrung. Manchmal reicht eine einzige Vorhonoperation, häufig sind auch zwei aufeinanderfolgende Vorhonoperationen vorgesehen. Vorhonoperationen werden mit relativ grobkörnigen Schneidkörpern durchgeführt, um hohe Zerspanleistungen zu erzielen. Das Vorhonen dient im Wesentlichen dazu, die gewünschte Makroform der Bohrung weitgehend festzulegen und eventuell aus der Vorbearbeitung resultierende Formfehler sowie Durchmesserstreuungen zu verringern. Während des Vorhonens können auch die hier im Mittelpunkt stehenden Grate am Bohrungseintritt (Werkzeugeintrittsseite) und am Bohrungsaustritt (Werkzeugaustrittseite) entstehen.

Nach dem Vorhonen gibt es bei gattungsgemäßen Feinbearbeitungsverfahren mehrere weitere Bearbeitungsoperationen mit Schneidkörpern feinerer Körnung und entsprechend geringerem Materialabtrag, um mit insgesamt relativ geringem Materialabtrag die am fertigen Werkstück benötigte Oberflächenstruktur zu erzeugen. Bei gattungsgemäßen Verfahren erfolgen nach dem Vorhonen ein Zwischenhonen der vorgehonten Bohrung in einer Zwischenhonoperation und ein Fertighonen der zwischengehonten Bohrung in einer Fertighonoperation. Beim Zwischenhonen gibt es in der Regel noch einen geringfügigen Materialabtrag, welcher deutlich geringer als beim Vorhonen ist und z.B. in der Größenordnung um 15 µm liegen kann. Beim Zwischenhonen wird die endgültige Basis bezüglich der Makroform für die Folgeoperation gelegt. Das Fertighonen arbeitet dann im Wesentlichen ohne Materialabtrag (Abtrag beispielsweise weniger als 10 µm, insbesondere weniger als 5 µm), wobei der Prozess so ausgelegt ist, dass die aus der Zwischenhonoperation resultierende Oberflächenstruktur noch optimiert wird. Sofern gefordert, kann mit dem Fertighonen auch eine Kreuzschliffstruktur mit bestimmtem Honwinkel erzeugt werden. Das kann durch zwei zusätzliche Hübe mit entsprechender Hubgeschwindigkeit/Drehzahl erreicht werden, wobei die Hubgeschwindigkeit bei der Honwinkelerzeugung in der Regel deutlich höher ist als beim ersten Hub zur Durchmessererzeugung.

Um die vor allem beim Vorhonen erzeugten Grate am Bohrungseintritt und Bohrungsaustritt zu beseitigen, sind bei gattungsgemäßen Verfahren noch eine erste Entgratoperation zum Entgraten eines ersten Bohrungsrands an einer Werkzeugaustrittsseite und eine zweite Entgratoperation zum Entgraten eines gegenüberliegenden zweiten Bohrungsrands an einer Werkzeugeintrittsseite vorgesehen. Beim Vertikalhonen liegt die Werkzeugautrittsseite unten, weshalb dann die erste Entgratoperation auch als "Entgraten unten" bezeichnet wird.

Bei den der Anmelderin derzeit bekannten Feinbearbeitungsverfahren dieser Art werden die eintrittsseitigen und austrittsseitigen Grate im Zusammenhang mit dem Zwischenhonen beseitigt, so dass die Fertighonoperation bereits am entgrateten Werkstück stattfindet. Diese Vorgehensweise trägt dem Umstand Rechnung, dass die Grate weit überwiegend oder ausschließlich beim Vorhonen entstehen und die Fertighonoperation lediglich noch die Oberflächenstruktur verbessert, ohne dass dort Grate mit kritischen Dimensionen erzeugt werden.

Die Erfinder haben durch intensive Analysen der Prozesskette herausgefunden, dass eine Änderung der Abfolge von Prozessschritten zu erheblichen Taktzeitverkürzungen führen kann. Gemäß dem Vorschlag der Erfindung sollen nämlich die erste Entgratoperation, also das Entgraten des Bohrungsrands an der Werkzeugaustrittsseite, nach dem Vorhonen und vor dem Fertighonen durchgeführt werden, während die zweite Entgratoperation, also das Entfernen von Graten an dem an der Werkzeugeintrittsseite liegenden zweiten Bohrungsrand, erst nach dem Fertighonen durchgeführt wird. Das Entgraten wird somit auf zwei unterschiedliche Prozessstufen verteilt. Dies erscheint zunächst widersinnig, da die Prozesskette dadurch verkompliziert zu werden scheint. Allerdings ergeben sich in der Praxis erhebliche Taktzeitvorteile. Dies kann unter anderem so verstanden werden. Die Zwischenhonoperation ist erfahrungsgemäß eine Operation, die häufig ähnlich viel Honzeit benötigt wie die Fertighonoperation. Wird diese allerdings noch um zwei zeitaufwändige Entgratoperationen am Bohrungseintritt und Bohrungsaustritt ergänzt, ergibt sich insgesamt im Kontext des Zwischenhonens eine relativ lange Bearbeitungszeit. Gemäß dem Vorschlag der Erfindung wird nun die Entgratoperation des Bohrungseintritts aus dem Kontext der Zwischenhonoperation weggenommen und zur Fertighonoperation übertragen. Dadurch lassen sich tatsächlich Zeitvorteile bei der Honzeit bzw. Bearbeitungszeit in der Größenordnung von ca. 1 s bis 1,5 s realisieren. Denn die erforderliche Bearbeitungszeit im Kontext des Zwischenhonens wird reduziert und der in der Regel nicht zeitkritischen Fertighonstufe zugeordnet.

Vorzugsweise wird die erste Entgratoperation (an der Werkzeugaustrittsseite der Bohrung) nicht bereits nach dem Vorhonen, sondern nach dem Zwischenhonen, aber vor dem Fertighonen durchgeführt und die zweite Entgratoperation, nämlich das Entgraten des Bohrungseintritts, nach dem Fertighonen durchgeführt.

Vorzugsweise werden die Zwischenhonoperation und die erste Entgratoperation ohne zwischenzeitlichen Werkzeugwechsel mit einem ersten Kombinationswerkzeug durchgeführt, das einen Honabschnitt und einen ersten Entgratabschnitt aufweist, welcher axial versetzt an einer spindelabgewandten Seite des Honabschnitts angeordnet ist.

In analoger Weise werden vorzugsweise die Fertighonoperation und die zweite Entgratoperation ohne zwischenzeitlichen Werkzeugwechsel mit einem zweiten Kombinationswerkzeug durchgeführt, das einen Honabschnitt und einen zweiten Entgratabschnitt aufweist, welcher axial versetzt zum Honabschnitt an einer spindelzugewandten Seite des Honabschnitts angeordnet ist.

Hierdurch lassen sich erhebliche Zeitgewinne bei der kombinierten Hon- und Entgratbearbeitung erzielen.

Für die Entgratoperationen werden vorzugsweise Honwerkzeuge der in dieser Anmeldung beschriebenen und beanspruchten Art genutzt. Dies ist jedoch nicht zwingend. Die Vorteile der verkürzten Prozesskette können auch dann erzielt werden, wenn Kombinationswerkzeuge anderer Konstruktion und Bauart verwendet werden oder wenn für das Honen und Entgraten unterschiedliche Werkzeuge genutzt werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
- Fig. 1: zeigt eine schrägperspektivische Ansicht eines Kombinationswerkzeugs gemäß einem ersten Ausführungsbeispiel;
- Fig. 2: zeigt eine vergrößerte Darstellung des Werkzeugs aus Fig. 1 im Bereich des Entgratabschnitts;
- Fig. 3: zeigt einen axialen Schnitt durch das Kombinationswerkzeug;
- Fig. 4: zeigt schrägperspektivisch die Aufnahmetaschen im Bereich des Entgratabschnitts;
- Fig. 5: zeigt einen Axialschnitt durch den Bereich des Entgratabschnitts und die Aufnahmetaschen;
- Fig. 6: zeigt eine schrägperspektivische Ansicht eines Schneidsegments;
- Fig. 7A: zeigt in Fig. 7A einen vertikalen Schnitt durch das Schneidsegment und in Fig. 7B; eine Ansicht des Schneidsegments von der Bodenseite
- Fig. 8: zeigt einen Querschnitt durch das Kombinationswerkzeug und durch Schneidsegmente im Entgratabschnitt;
- Fig. 9: zeigt einen axialen Schnitt durch ein Kombinationswerkzeug gemäß einem zweiten Ausführungsbeispiel mit axial und radial gefederten Schneidsegmenten;
- Fig. 10 bis 12: zeigen verschiedene Ansichten eines Schneidsegments für das Kombinationswerkzeug aus Fig. 9;
- Fig. 13: zeigt die axial und radial wirkenden Paare von Schraubendruckfedern in einer Aufnahmetasche;
- Fig. 14: zeigt einen Längsschnitt durch ein Kombinationswerkzeug gemäß einem dritten Ausführungsbeispiel;
- Fig. 15 und 16: zeigen verschiedene Ansichten eines zugehörigen Schneidsegments;
- Fig. 17: zeigt eine Detailansicht des Entgratabschnitts mit Schneidsegmenten, die über ringförmige Rückholfedern in den Aufnahmetaschen gehalten sind;
- Fig. 18: zeigt einen Längsschnitt durch die Situation in Fig. 17 und
- Fig. 19: zeigt ein weiteres Ausführungsbeispiel mit einem spindelseitigen Entgratabschnitt;
- Fig. 20: zeigt ein Ausführungsbeispiel mit einem spindelfernen Entgratabschnitt;
- Fig. 21: zeigt ein Ausführungsbeispiel mit einem spindelseitigen und einem spindelfernen Entgratabschnitt;
- Fig. 22: zeigt ein Kombinationswerkzeug gemäß dem dritten Ausführungsbeispiel bei der Entgratoperation zum Entgraten des Bohrungseingangs einer Pleuelbohrung an einem Pleuel.

### DETAILLIERTE BESCHREIBUNG DER AUSFÜHRUNGSBEISPIELE

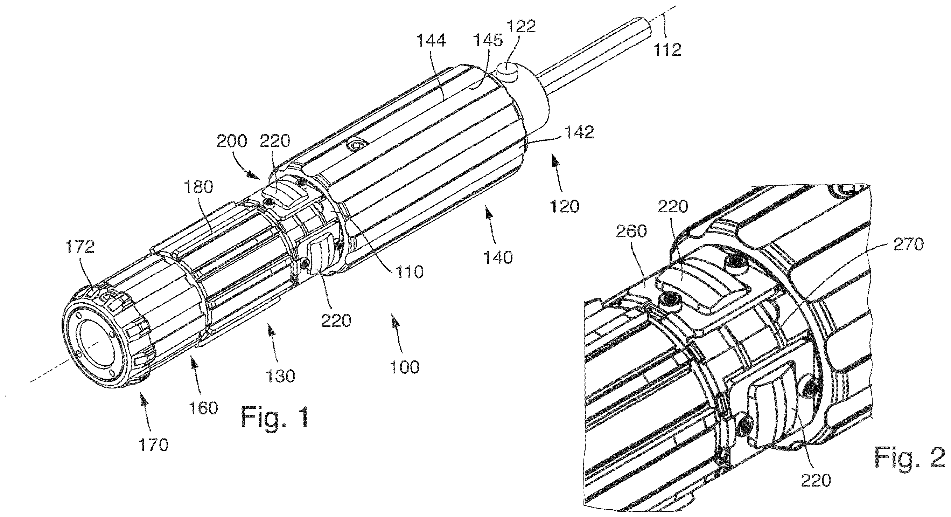

In Fig. 1 ist eine Ausführungsform eines Kombinationswerkzeugs 100 zum Honen und Entgraten einer Bohrung gezeigt. Ein bevorzugtes Anwendungsgebiet ist die Bearbeitung eines Pleuelauges in einem Pleuel durch Honen und Entgraten.

Das Kombinationswerkzeug hat einen langgestreckten Werkzeugkörper 110 aus Stahl, der eine Werkzeugachse 112 definiert, die auch die Rotationsachse des Kombinationswerkzeugs bei der Bearbeitung ist. Am spindelseitigen Ende des Kombinationswerkzeugs befinden sich Kupplungsstrukturen 120 zur Ankopplung des Werkzeugkörpers an eine Arbeitsspindel oder ein Antriebselement einer Bearbeitungsmaschine. Im Ausführungsbeispiel ist ein mit Radialbolzen 122 versehener Kupplungsteil einer Bajonettkupplung integral mit den Werkzeugkörper 110 ausgebildet.

Anschließend an den Kupplungsabschnitt folgen in Axialrichtung in dieser Reihenfolge ein Führungsabschnitt 140, ein Entgratabschnitt 200, ein Honabschnitt 130, ein nicht für einen Materialabtrag vorgesehener Zwischenabschnitt 160 und am spindelfernen Ende ein Einführungsabschnitt 170.

Im Werkzeugkörper 110 ist eine parallel zur Werkzeugachse 112 koaxial mit dieser verlaufende Führungsöffnung 114 zur Aufnahme und Führung eines parallel zur Werkzeugachse 112 verschiebbaren Zustellelements 190 ausgebildet.

Das Kombinationswerkzeug weist einen Honabschnitt 130 mit mehreren von der Führungsöffnung 114 radial zur Werkzeugachse 112 durchgehenden Durchbrechungen zur Aufnahme jeweils einer Honleisteneinheit 180 auf. Im Honabschnitt 130 sind zehn in gleichmäßiger Winkelteilung um den Umfang des Werkzeugkörpers 110 verteilte Schneidstoffkörper 185 in Form von Honleisten angeordnet. Jede Honleiste 185 ist an der Außenseite eines Honleistenträgers 184 befestigt, der in einer der radial zur Werkzeugachse verlaufenden Durchbrechungen radial beweglich geführt ist. Die Honleistenträger haben an ihrer radialen Innenseite schräge Auflageflächen, stehen mit dem Zustellelement 190 in Form eines Zustellkonus in Wirkverbindung und können durch axiale Verschiebung des Zustellelements 190 radial zur Werkzeugachse 112 in Richtung einer Innenfläche der Bohrung zugestellt werden. Bei anderen Ausführungsbeispielen können weniger oder mehr Honleisten vorgesehen sein, beispielsweise zwischen vier und vierzehn Honleisten.

Das Kombinationswerkzeug ist für einen Prozess des Einhub-Honens (auch als Dornhonen oder Precidorhonen bekannt) konzipiert, worin das Werkzeug in der Bohrung nur einen einzigen Hub mit einer Hinbewegung und einer Zurückbewegung jeweils bei gleichzeitiger Drehung in der Bohrung ausführt. Der wirksame Durchmesser (Hondurchmesser) des Honabschnitts wird vor der Bearbeitung der Bohrung fest eingestellt. Dazu ist eine Zustellstange 192 mit Sechskantquerschnitt vorgesehen, die an ihrem dem Zustellkonus 190 zugewandten Endabschnitt ein Außengewinde aufweist, das mit einem Innengewinde am Eingangsbereich der Führungsöffnung 114 zusammenwirkt. Die Zustellstange ist über ein Drehlager mit einem gegen Verdrehung gesicherten, aber axial verschiebbaren Zwischenstück 194 gekoppelt, das in der Führungsöffnung 114 geführt ist und am Zustellkonus 190 angreift.

Das Kombinationswerkzeug ist für eine materialabtragende Bearbeitung eines Pleuelauges in einem Pleuel durch Honen und Entgraten konstruiert. Dabei wird bekanntlich das Werkzeug außerhalb der Bohrung an der Bohrungseintritsseite in einer oberen Werkzeugführung geführt, während das Werkstück schwimmend gelagert ist. Dadurch kann eine Koaxialität von Werkzeug und Werkstück mit allenfalls einer sehr kleinen Abweichung gewährleistet werden.

Für die Wechselwirkung mit der oberen Werkzeugführung weist das Kombinationswerkzeug einen spindelseitig von Honabschnitt 130 liegenden Führungsabschnitt 140 zur Führung des Werkzeugkörpers in der oberen Werkzeugführung eines Werkstückaufnahmesystems auf. Der Führungsabschnitt ist zwischen den Kupplungsstrukturen 120 und dem Honabschnitt 130 angeordnet. Der Führungsabschnitt ist länger als Honabschnitt, z.B. etwa doppelt so lang. Der Führungsabschnitt weist an seinem Umfang mehrere über den Umfang verteilte, parallel zur Werkzeugachse verlaufende Längsnuten 142 auf. Zwischen den Längsnuten liegen in Axialrichtung laufende Rippen 144, deren radiale Außenflächen 145 auf einer gemeinsamen Zylinderfläche liegen, glatt bearbeitet sind und damit nicht schneidend wirken und als Führungsflächen zur Führung der Axialbewegung des Werkzeugs dienen. Die Längsnuten bilden Kanäle zur Zufuhr von Kühlschmierstoff zum Eingriffsbereich zwischen Honabschnitt und Bohrungsinnenfläche.

Ein jenseits des Honabschnitts 130 liegender Zwischeabschnitt 160 ist ebenfalls mit Längsnuten am Umfang versehen. Er sorgt für einen günstigen axialen Abstand zwischen Honabschnitt 130 und dem Einführabschnitt 170.

In dem am vorderen Ende des Kombinationswerkzeugs angeordneten Einführabschnitt 170 sind über den Umfang verteilt zehn aus Hartmetall gefertigte, auswechselbare Führungselemente 172 mit schräg zur Werkzeugachse orientierten glatten Führungsflächen angeordnet. Der Einführabschnitt sorgt beim Einführen des Werkzeugs in die Bohrung mechanische für eine Zentrierung ohne Beschädigung von Werkstück oder Werkzeug. Bei Verschleiß können die Führungselemente bequem ausgetauscht werden. Alle keilförmigen Hartmetall-Elemente sind auf einem gemeinsamen Trägerring montiert, der auf den Werkzeugkörper aufgeschraubt wird und der leicht auswechselbar ist.

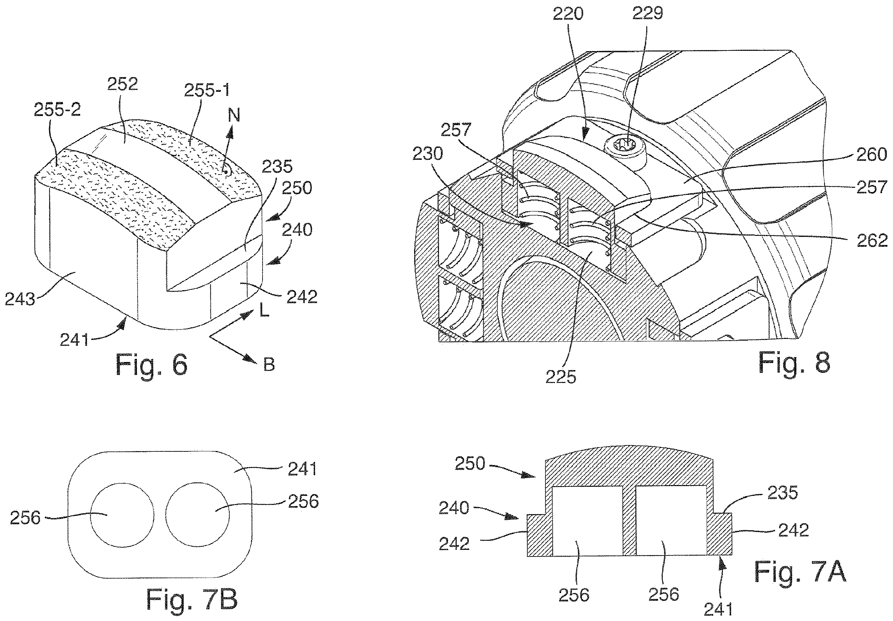

Zwischen dem Honabschnitt 130 und dem (spindelseitigen) Führungsabschnitt 140 ist an der spindelzugewandten Seite des Honabschnitts 130 der Entgratabschnitt 200 angeordnet. Im Entgratabschnitt 200 sind im Beispielsfall vier gleichmäßig über den Umfang des Kombinationswerkzeugs verteilte Schneidsegmente 220 angeordnet. Die Fig. 6, 7A und 7B zeigen eine isometrische Ansicht eines Schneidsegments, einen senkrechten Schnitt durch ein Schneidsegment in dessen Breitenrichtung B bzw. Umfangsrichtung, sowie eine Ansicht der Unterseite des Schneidsegments 200. Fig. 8 zeigt einen senkrecht zur Werkzeugachse orientierten Querschnitt durch das Kombinationswerkzeug und durch Schneidsegmente im Entgratabschnitt

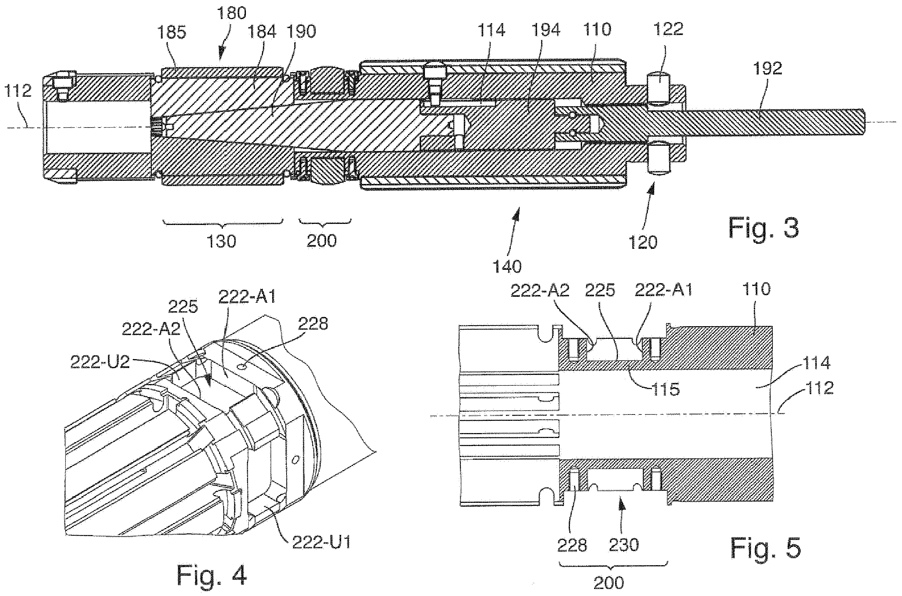

Für jedes der Schneidsegmente 200 ist im Werkzeugkörper eine individuelle Aufnahmetasche 230 vorgesehen. Der Begriff "Aufnahmetasche" beschreibt hier eine Ausnehmung im Material des Werkzeugkörpers 110, die zur Aufnahme eines Schneidsegments dient. In den Fig. 3 bis 5 ist die Gestalt der Aufnahmetasche besonders gut zu erkennen. Eine Aufnahmetasche 230 hat auf seiner radialen Innenseite, also auf der der Werkzeugachse 112 zugewandten Seite, eine ebene Bodenfläche 225, die senkrecht zur Radialrichtung ausgerichtet ist und in Radialrichtung in einem Abstand zur Innenwand der Führungsöffnung 114 liegt, so dass zwischen der Aufnahmetasche und der Führungsöffnung ein Steg 115 aus Werkzeugkörpermaterial bleibt. Die Aufnahmetasche 230 geht also nicht bis zur Führungsöffnung 114 durch. In Axialrichtung des Werkzeugkörpers wird die Aufnahmetasche durch zwei parallel zueinander liegende axiale Seitenflächen 222-A1 und 222-A2 begrenzt, die senkrecht zur Bodenfläche orientiert sind. In Umfangsrichtung wird die Aufnahmetasche durch zwei senkrecht zur Bodenfläche orientierte Seitenflächen 222-U1 und 222-U2 begrenzt. In den inneren Eckbereichen am Übergang zwischen den jeweils senkrecht zueinander orientierten Seitenflächen sind um 45° schräggestellte flache Schrägflächen ausgebildet.

In Axialrichtung neben den Seitenflächen 222-A1 und 222-A2 ist im Werkzeugkörper jeweils eine Sacklochbohrung 228 mit Innengewinde eingearbeitet. Die Sacklochbohrungen liegen in ebenen Oberflächenabschnitten des Werkzeugkörpers, die sich axial vorne und hinten an die Aufnahmetasche 230 anschließen. Diese dienen als ebene Auflagefläche für eine später noch zu beschreibende Halteplatte 260 (vgl. z.B. Fig. 2 und 3).

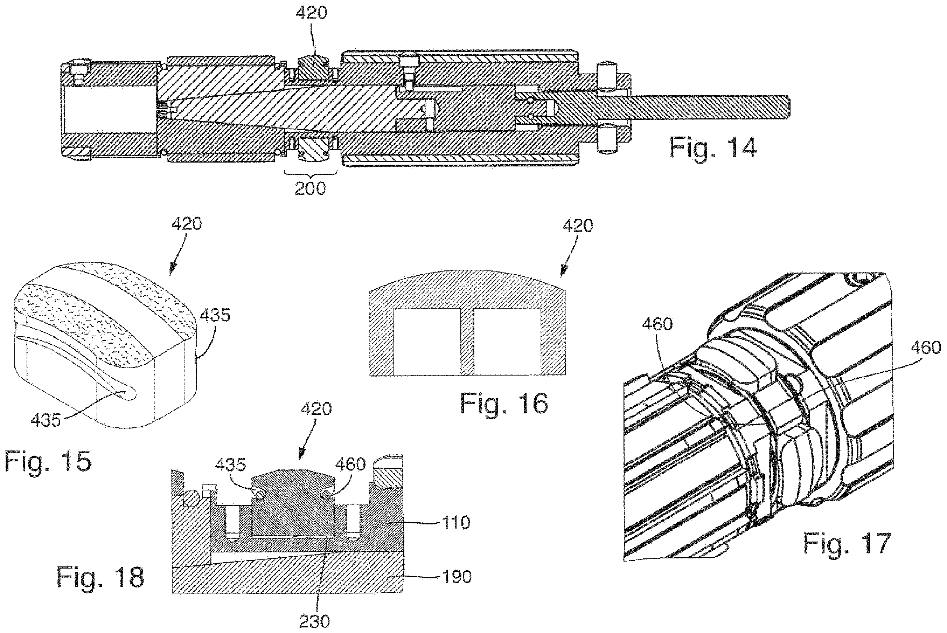

In Umfangsrichtung zwischen benachbarten Aufnahmetaschen verbleibt jeweils ein breiter Steg aus Material des Werkzeugkörpers. Diese Stege weisen jeweils im Bereich der axialen Enden der Aufnahmetasche Abschnitte einer Umfangsnut 270 auf, die in anderen Ausführungsbeispielen auch entfallen kann und bei anderen Ausführungsbeispielen als Aufnahmenut für eine ringförmig umlaufende Haltefeder für Schneidsegmente dient (vgl. Fig. 14 bis 18)).

Das Schneidsegment 220 (vgl. z.B. Fig. 6) ist ein im Wesentlichen einstückiges Bauteil, welches durch materialabtragende Bearbeitung aus einem Materialblock oder durch ein additives Fertigungsverfahren, beispielsweise 3D-Druck, gefertigt werden kann. Die Dimensionen des Schneidsegments 220 in Axialrichtung und in Umfangsrichtung sind so an die Dimensionen der Aufnahmetasche 230 angepasst, dass das Schneidsegment axial und in Umfangsrichtung im Wesentlichen ohne Spiel, aber radial beweglich in die Aufnahmetasche 230 eingesetzt werden kann. Dabei ist die Breitenrichtung B des Schneidsegments in Umfangsrichtung und seine Längsrichtung L in Axialrichtung des Werkzeugkörpers orientiert.

Das Schneidsegment umfasst einen Basisabschnitt 240, dessen ebene Unterseite 241 im montierten Zustand der Bodenfläche 225 der Aufnahmetasche 230 zugewandt ist. An den im Breitenrichtung B liegenden Enden des Basisabschnitts sind senkrecht zur Bodenseite orientierte ebene Führungsflächen 242, ausgebildet, deren lichter Abstand im Wesentlichen dem Abstand zwischen den in Umfangsrichtung wirkenden Seitenflächen 222-U1, 222-U2 der Aufnahmetasche 230 entspricht, so dass diese als Führungsflächen für eine Radialbewegung des Schneidsegments dienen können. An den in Breitenrichtung verlaufenden Längsseiten des Schneidsegments 220 sind senkrecht zur Bodenfläche orientierte Flächen 243 ausgebildet, deren Abstand in Axialrichtung im Wesentlichen der in Axialrichtung gemessenen lichten Weite zwischen den Seitenflächen 222-A1 und 222-A2 der Aufnahmetasche 230 entspricht.

Ist das Schneidsegment 220 in die Aufnahmetasche 220 eingesetzt, so sitzt es in Axialrichtung und in Umfangsrichtung mit sehr kleinem Spiel oder im Wesentlichen spielfrei, aber radial beweglich in der Aufnahmetasche 230. Von der Bodenfläche 241 her sind im Korpus des Schneidsegments 220 zwei zylindrische Sacklochöffnungen 256 eingearbeitet. Diese dienen als Federaufnahme zur Aufnahme von Schraubendruckfedern 257, die für eine in Radialrichtung federnde Lagerung des Schneidsegments in der Aufnahmetasche sorgen (vgl. Fig. 8).

Das Schneidsegment 220 hat also in einem bodennahen Bereich einen mit den Führungsflächen 242, 243 ausgestatteten Führungsabschnitt mit seitlichen Führungsflächen zur Führung von Bewegungen in der Aufnahmetasche. Nach oben (also radial nach außen) schließt sich ein im Querschnitt schmalerer Außenabschnitt 250 an, der an seiner der Bodenfläche 241 gegenüberliegenden Außenseite die später noch beschriebenen Schneidflächen des Schneidsegments sowie eine nicht schneidende Führungsfläche aufweist. An den (im eingebauten Zustand in Umfangsrichtung orientierten) Schmalseiten des Schneidsegments 220 geht der verbreiterte Bodenabschnitt bzw. Führungsabschnitt 240 unter Bildung einer Schulter oder Stufe 235 in den Außenabschnitt 240 über.

Die radiale Außenfläche des Schneidsegments ist in drei Abschnitte unterteilt. Im mittleren Drittel befindet sich eine zylindrisch gekrümmte Führungsfläche 252 mit einer relativ glatten, nicht schneidenden Oberfläche. Der Krümmungsradius entspricht im Wesentlichen dem Krümmungsradius derjenigen Bohrung, für die das Kombinationswerkzeug vorgesehen ist. Auf jeder Seite des Mittelabschnitts befindet sich jeweils eine in Breitenrichtung des Schneidsegments bzw. in Umfangsrichtung des Kombinationswerkzeugs gekrümmte Schneidfläche 255-1 bzw. 255-2, die schräg zur Werkzeugachse bzw. zur Bodenfläche des Schneidsegments orientiert ist. Die Schrägstellung ist so gewählt, dass die lokale Oberflächennormale N der Schneidfläche an jedem Ort der Schneidfläche in einem Winkel von ca. 10° bis 20° zur Radialrichtung des Werkzeugkörpers geneigt ist. Die beiden Schneidflächen werden durch die Oberflächen eines Schneidbelags gebildet, der Diamant-Schneidkörner mit geometrisch unbestimmten Schneiden in einer galvanisch aufgebrachten, metallischen Bindung aufweist. Ist eine Schneidfläche 255-1 oder 255-2 verschlissen, lässt sich das Schneidsegment umdrehen, so dass die andere Schneidfläche 255-1 zum Einsatz kommt (oder umgekehrt)

Jedes Schneidsegment deckt in Umfangsrichtung einen relativ großen Winkelbereich ab, der z.B. im Bereich von 20° bis 50° liegen kann. Damit wird beim Entgraten zu jedem Zeitpunkt ein relativ hoher Anteil des zu entgratenden Bohrungsrandes (z.B. zwischen 20% und 40% des Umfangs) bearbeitet, wodurch eine gleichmäßige Entgratung gefördert wird.

Der Zusammenbau des Kombinationswerkzeugs ist sehr einfach zu bewerkstelligen. Zunächst wird in jede der Federaufnahmen 256 im Bodenbereich des Schneidsegments 220 eine Schraubendruckfeder 257 eingesetzt, deren axiale Länge im entspannten Zustand etwas größer ist als die Tiefe der Federaufnahmen. Dann wird das mit Druckfedern versehene Schneidsegment in die Aufnahmetasche 230 eingesetzt, so dass sich die freien Enden der Druckfedern an der Bodenfläche 225 abstützen (vgl. Fig. 8).

Zur Sicherung des Schneidsegments 220 gegen Herausfallen aus der Aufnahmetasche 230 wird dann ein Sicherungselement in Form einer Halteplatte 260 von außen auf das Schneidsegment aufgestülpt und mithilfe von zwei in die Gewindebohrungen 228 eingeschraubten Befestigungsschrauben 229 am Werkzeugkörper 110 verschraubt. Die Halteplatte 260 ist nach Art eines Rechteckrahmens ausgebildet, der eine im Wesentlichen rechteckförmige Durchlassöffnung 262 aufweist. Die Innendimensionen der Durchlassöffnung sind so ausgelegt, dass der radial außenliegende Führungsabschnitt 250 des Schneidsegments 220 mit geringem Seitenspiel durch die Durchlassöffnung hindurchpasst. Die lichte Weite in Umfangsrichtung ist jedoch kleiner als die in Längsrichtung gemessene Länge des Schneidsegments, so dass die Halteplatte auf der Schulter 235 aufliegt, die beim Befestigen der Halteplatte dann von den Federn gegen die Innenseite der Halteplatte 260 gedrückt wird.

Im fertig montierten Zustand und in Abwesenheit äußerer Kräfte wird das Schneidsegment 220 durch die beiden Druckfedern von innen gegen die Halteplatte 260 gedrückt und die Bodenfläche des Schneidsegments 220 befindet sich in Radialrichtung in einem Abstand oberhalb der Bodenfläche der Aufnahmetasche. Wirkt nun von außen eine in Radialrichtung nach innen wirkende Kraftkomponente auf das Schneidsegment 220, so kann das Schneidsegment entgegen der Federkraft der Schraubendruckfeder in die Aufnahmetasche 230 eintauchen (vgl. Fig. 8).

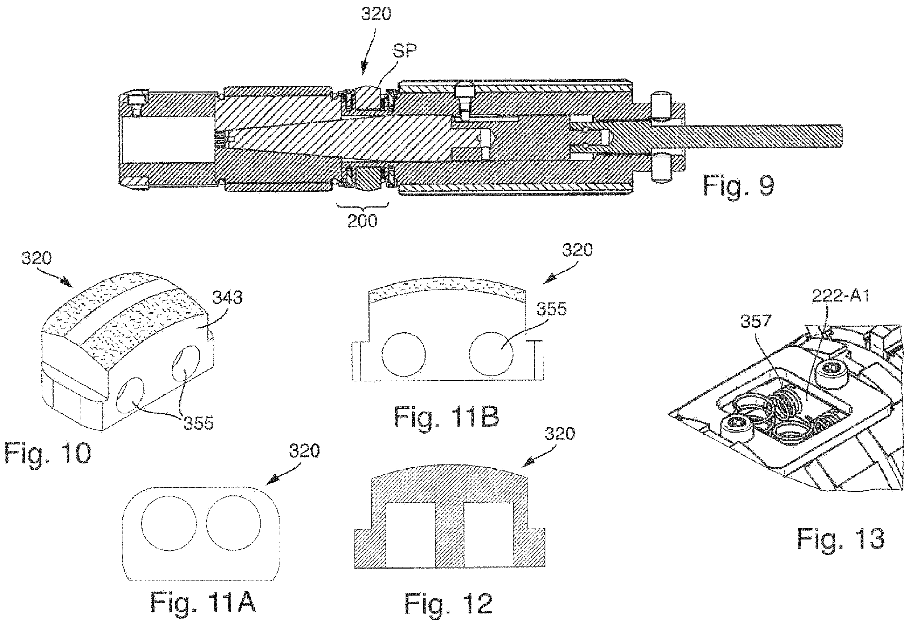

Anhand der Fig. 9 bis 13 wird ein zweites Ausführungsbeispiel erläutert. Für identische oder funktionell und/oder strukturell identische oder ähnliche Merkmale werden dieselben Bezugszeichen wie in Fig. 2 genutzt.

Unterschiede zum ersten Ausführungsbeispiel gibt es lediglich im Bereich des Entgratabschnitts 200, weshalb wegen der übrigen Komponenten auf die Beschreibung des ersten Ausführungsbeispiels verwiesen wird. Der Werkzeugkörper ist im Bereich des Entgratabschnitts identisch mit dem ersten Ausführungsbeispiel. Jedoch sind die in die Aufnahmetaschen 230 eingefügten Schneidsegmente 320 nicht nur radial gefedert, sondern auch in Axialrichtung des Werkzeugs federnd gelagert.

Die Fig. 10 bis 13 zeigen verschiedene Ansichten eines Schneidsegments 320. Dessen Länge, also der Abstand zwischen den ebenen Seitenflächen 343, ist deutlich (z.B. zwischen 1 mm bis 5 mm) kleiner als die in Axialrichtung gemessene lichte Weite der Aufnahmetasche des ersten Beispiels, so dass bei eingesetztem Schneidsegment 320 in Axialrichtung ein Spalt SP verbleibt. An der in Fig. 10 sichtbaren Seite sind zusätzlich zu den von der Bodenfläche ausgehenden zylindrischen Federaufnahmen zwei axiale Federaufnahmen 355 ausgebildet, die jeweils eine Schraubendruckfeder 357 aufnehmen sollen, die sich im eingebauten Zustand (Fig. 9 oder 8 oder 13) in Axialrichtung einerseits an der Bodenfläche dieser Federaufnahmen und andererseits an der Seitenfläche 222-A1 der Aufnahmetasche abstützt. Dadurch wird das Schneidsegment 320 in Abwesenheit äußerer Kräfte in Richtung des spindelfernen Endes des Kombinationswerkzeugs vorgespannt und kann bei axialer Belastung in entgegengesetzte Richtung gegen die Kraft dieser axialen Federn begrenzt bewegt werden.

Durch die axiale Federung kann eine zusätzliche, in Axialrichtung wirkende Kraft beim Entgraten des Bohrungseingangs ausgeübt werden. Die abrasive Schneidfläche des Schneidsegments wird also nicht nur in Radialrichtung an den Bohrungsrand angedrückt, sondern bei entsprechender Axialposition des Kombinationswerkzeugs auch in Axialrichtung. Hierdurch kann gegebenenfalls eine noch genauere Bearbeitung am Übergang zwischen Bohrung und Werkstückseitenfläche erreicht werden, da alle Schneidsegmente mit im Wesentlichen gleichen Anpressdruck arbeiten, auch wenn ihre axiale Position im Werkzeugkörper toleranzbedingt leicht unterschiedlich sein kann.

Anhand der Fig. 14 bis 18 wird ein drittes Ausführungsbeispiel eines Kombinationswerkzeugs erläutert, welches sich von den anderen Ausführungsbeispielen nur im Bereich des Entgratabschnitts 200 unterscheidet. Der Unterschied besteht in der Art der Sicherung der eingebauten Schneidsegmente 420 gegen Herausfallen aus der Aufnahmetasche 230. Diese Sicherung wird nicht durch eine radial aufgesetzte Halteplatte erreicht, sondern durch zwei ringförmig umlaufende Rückholfedern 460, die im Werkzeugkörper in den oben bereits erwähnten Umfangsnuten 270 eingesetzt sind. Am zugehörigen Schneidsegment (vgl. zum Beispiel Fig. 15) sind an den in Axialrichtung auszurichtenden Seitenflächen bogenförmige Seitennuten 435 eingearbeitet, in die die Rückholfedern im zusammengesetzten Zustand seitlich eingreifen (vgl. Fig. 17 und 18). Die radiale Federung wird bei diesem Ausführungsbeispiel genauso realisiert wie bei den anderen, und zwar mittels in Federaufnahmen eingebauter Schraubendruckfedern. Die umlaufenden Rückholfedern bringen eine entsprechende Gegenkraft auf und halten das in die Aufnahmetasche eingesetzte Schneidsegment verliergesichert in der Aufnahmetasche.

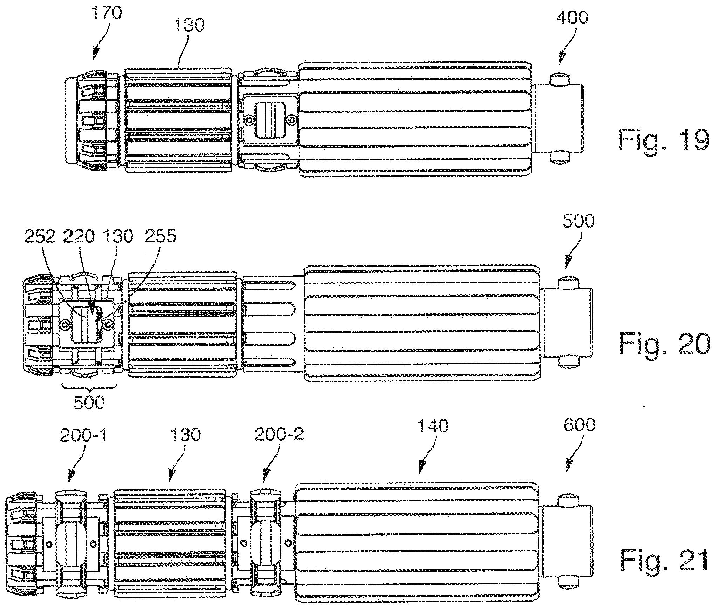

Die Fig. 19 bis 20 zeigen weitere Ausführungsbeispiele von Kombinationswerkzeugen. Das Kombinationswerkzeug 400 in Fig. 19 unterscheidet sich vom ersten Ausführungsbeispiel (vgl. zum Beispiel Fig. 1) dadurch, dass an der spindelabgewandten Seite des Honabschnitts 130 kein Zwischenabschnitt liegt, so dass unmittelbar der Einführabschnitt 170 folgt.

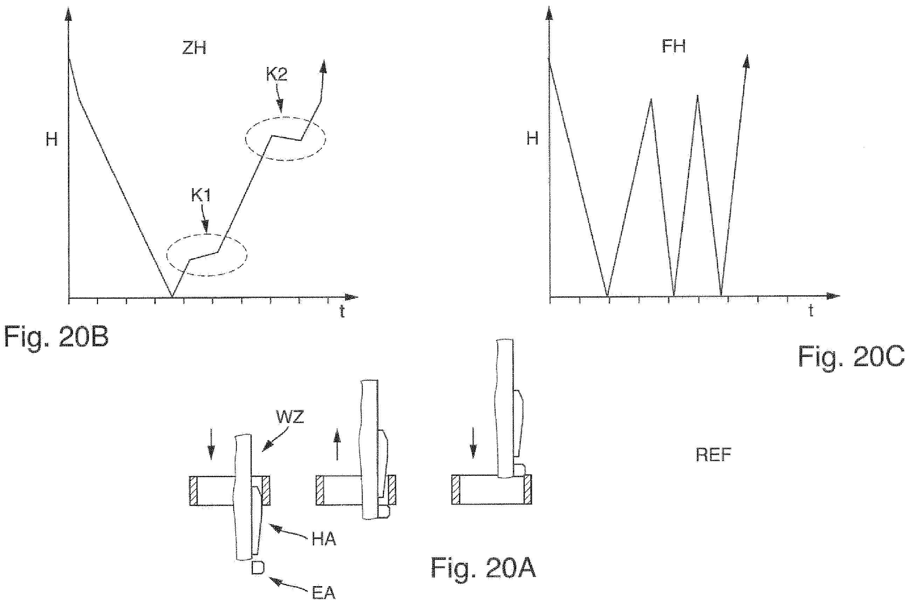

Das Kombinationswerkzeug 500 in Fig. 20 ist ein weiteres Beispiel für ein Kombinationswerkzeug, welches zusätzlich zum Honabschnitt 130 nur einen einzigen Entgratabschnitt hat. Im Unterschied zu den bisherigen Ausführungsbeispielen ist der Entgratabschnitt 500 an der spindelabgewandten Seite des Honabschnitts 130 angeordnet. Auch hier sind die Aufnahmetaschen für die Schneidsegmenten in den Werkzeugkörper eingearbeitet, der auch über den Entgratabschnitt hinausgeht und den Trägerring mit den keilförmigen Führungselementen des Einführabschnitts 170 trägt. Dieser Entgratabschnitt ist in erster Linie dafür gedacht, an der Werkzeugaustrittsseite einer Bohrung eventuelle Grate zu beseitigen.

Das Kombinationswerkzeug kann z.B. wie folgt genutzt werden. Die radial gefederten Schneidsegmente 220 sind auf dem Werkzeugkörper montiert und werden gegen Herausfallen von dem geschraubten flachrahmenförmigen Halteblech 260 gehalten. Die Funktion der radialen Federung ist notwendig, damit die Schneidsegmente während des Einfahrens in der Bohrung radial nach innen ausweichen können. Während des Durchfahrens durch die Bohrung streifen die Schneidsegmente mit ihrer zylindrischen Führungsfläche 252 auf der Bohrungswand entlang, ohne Beschädigungen zu verursachen. Sobald die Schneidsegmente beim Heraustreten des Werkzeugs aus der Bohrung herausfahren, werden sie von den Federn nach außen gedrückt, bis jeweils eine der an der spindelnahen Seite liegenden schrägen abrasiven Schneidflächen 255 in Eingriff mit dem zu entgratenden unteren Bohrungsrand kommen. Mit einer Drehbewegung des Kombinationswerkzeugs kann ein eventueller Grat am Bohrungsrand in einer exakten Position des geführten Werkzeugs entfernt werden.

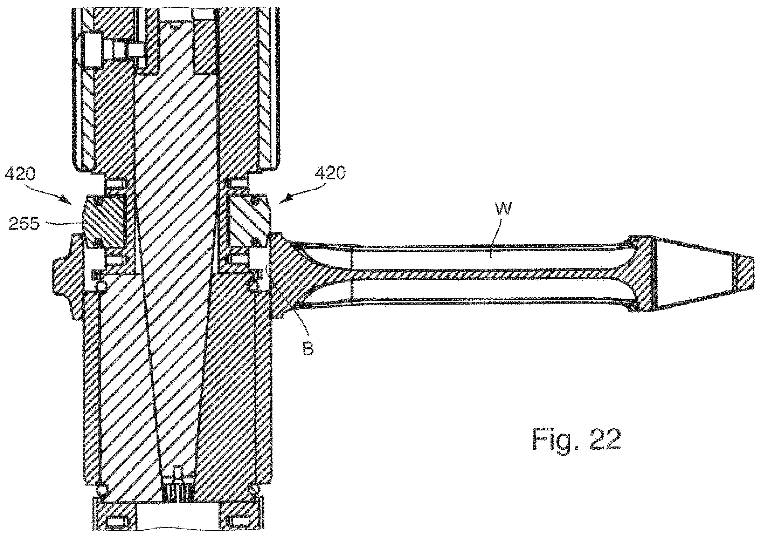

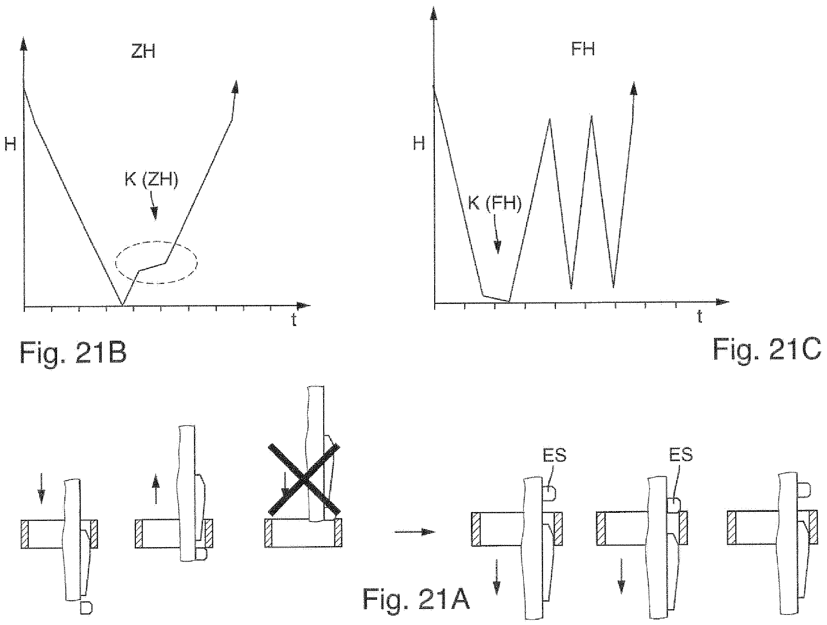

An einem Kombinationswerkzeug kann mehr als ein Entgratabschnitt vorgesehen sein. Beim Ausführungsbeispiel eines Kombinationswerkzeugs 600 in Fig. 21 sind zwei untereinander im Wesentlichen identisch aufgebaute Entgratabschnitte vorgesehen, nämlich ein erster Entgratabschnitt 200-1 an der spindelabgewandten Seite des Honabschnitts 130 zwischen diesem und dem Einführabschnitt sowie am gegenüberliegenden Ende des Honabschnitts ein zweiter Entgratabschnitt 200-2, der zwischen dem spindelseitigen Führungsabschnitt 140 und dem Honabschnitt 130 angeordnet ist. Mit diesem Kombinationswerkzeug ist es ohne Werkzeugwechsel möglich, nacheinander sowohl einen eventuellen Grat am spindelfernen Bohrungsaustritt als auch einen eventuellen Grat an der Eintrittsseite der Bohrung zu entfernen. In Fig. 22 ist ein Kombinationswerkzeug gemäß dem dritten Ausführungsbeispiel in einer Bearbeitungsposition gezeigt, in welcher die Schneidsegmente 420 des Entgratabschnitts 200 mit ihren schräg zur Werkzeugachse gerichteten spindelfernen Schneidflächen 255 eine Fase am eintrittsseitigen Rand der Pleuelbohrung B eines Pleuels W bearbeiten und von Graten befreien. Durch diese Bearbeitung kann eine gratfreie Fase am Bohrungseingang erzeugt werden.

Nachfolgend werden von den Erfindern entwickelte Verbesserungen bei mehrstufigen Feinbearbeitungsverfahren zum Honen und Entgraten einer Bohrung anhand eines Ausführungsbeispiels erläutert. Die Überlegungen beziehen sich auf eine Prozesskette, bei der eine vorbearbeitete Bohrung zunächst mit ein oder zwei Vorhonoperationen (VH) vorgehont wird und danach zwei weitere Honstufen erfolgen, nämlich ein Zwischenhonen (ZH) der vorgehonten Bohrung und ein Fertighonen (FH) der zwischengehonten Bohrung. Beim Zwischenhonen wird die beim Vorhonen mit gröberen Körnern bearbeitete Bohrung hinsichtlich Oberflächenrauheit und Zylinderform mithilfe feinerer Schneidkörner verbessert, die Fertighonoperation soll danach ohne substanziellen Materialabtrag nur noch die am Endprodukt gewünschte Oberflächenstruktur erzeugen. Vor allem beim Vorhonen entstehen bei den hier betrachteten Verfahren sowohl am Bohrungseintritt als auch am Bohrungsaustritt im Randbereich der Bohrung am Übergang zu den Seitenflächen des Werkstücks Grate, die durch Entgraten beseitigt werden müssen.

Anhand der Fig. 20A, 20B und 20C wird als Referenzbeispiel REF eine herkömmliche Vorgehensweise erläutert. Dabei zeigt Fig. 20A verschiedene Phasen der Hon- und Entgratoperation mithilfe eines Kombinationswerkzeugs WZ, das an der spindelabgewandten Seite des Honabschnitts HA einen Entgratabschnitt EA aufweist. Fig. 20B zeigt den Zusammenhang zwischen Hubposition H des Kombinationswerkzeugs und Bearbeitungszeit t beim Zwischenhonen, Fig. 20C zeigt den entsprechenden Zusammenhang beim Fertighonen.

Bei dieser herkömmlichen Vorgehensweise wird im Kontext mit dem Zwischenhonen ZH in der Phase des Zurückziehens des Kombinationswerkzeugs (mittleres Teilbild) zunächst das spindelferne untere Bohrungsende entgratet. Dazu wird die Hubgeschwindigkeit reduziert, was zu einem ersten Knick K1 in der Zeitkurve führt. Dann wird das Kombinationswerkzeug so weit aus der Bohrung herausgezogen, dass der Entgratabschnitt aus der Bohrung herausfährt. Dann wird die Hubrichtung kurzzeitig umgekehrt und der obere Bohrungsrand wird entgratet, was zu einer zweiten Stufe bzw. einem zweiten Knick K2 in der Zeitkurve führt. Danach wird das Kombinationswerkzeug zurückgezogen. Da nun beide Enden bereits entgratet sind, kann die Fertighonoperation FH ohne Entgratoperation relativ schnell beendet werden.

In Fig. 21 sind die entsprechenden Diagramme einer Prozesskette gemäß einem Ausführungsbeispiel dargestellt. Teilfigur 21A veranschaulicht, dass beim Zwischenhonen der letzte Teilschritt des Entgratens am oberen Bohrungsrand entfällt, so dass sich in der Zeitkurve (Fig. 21B) nur ein Knick K(ZH) bzw. eine Phase geringerer Hubgeschwindigkeit beim Herausziehen des Kombinationswerkzeugs ergibt. Im Vergleich zum Referenzbeispiel REF (Fig. 20B) wird dadurch die insgesamt für das Zwischenhonen ZH und Entgraten benötigte Bearbeitungszeit verkürzt, da der zweite Entgratschritt mit Umkehr der Hubrichtung (Knick K2 in Fig. 20B) entfällt.

Das Entgraten am Bohrungseintritt findet gemäß der rechten Teilfigur in der Endphase des Einfahrens des Kombinationswerkzeugs beim Fertighonen FH statt. Die an der Spindelseite des Honabschnitts angebrachten Entgratsegmente ES treten in dieser Endphase beim Vorschub in Kontakt mit dem oberen Bohrungsrand. Dann wird mit verringerter Hubgeschwindigkeit bei weiterem Vorschub nach unten entgratet. Danach erfolgen zwei weitere Hübe der Fertighonoperation.

Durch die Aufteilung des Entgratens auf das Zwischenhonen ZH und das Fertighonen FH ist beim Zwischenhonen eine Honzeitreduktion in der Größenordnung von ca. 1 s möglich, ohne dass weitere zeitrelevante Eingriffe bezüglich Hubgeschwindigkeit vorgenommen werden müssen. Wichtig ist nun die Erkenntnis, dass beim Fertighonen eine Zeitreserve vorhanden ist, da sehr wenig Abtrag notwendig ist. Außerdem kann weitgehend honzeitneutral entgratet werden. Das Entgraten findet im ersten Hub beim Einfahren des Kombinationswerkzeugs statt, wobei lediglich die Hubgeschwindigkeit, nicht aber die Hubrichtung geändert wird. Alternativ ist auch eine Haltezeit für den ersten Hub möglich. Für die folgenden Hübe ist dann im Vergleich zum Stand der Technik (Fig. 20C) eine Verlagerung der unteren Umsteuerpunkte nach oben vorgesehen, um ein Anstoßen der Entgratsegmente an den Bohrungsrand zu vermeiden. Die abschließenden beiden Hübe sind hier vorgesehen, um einen Kreuzschliff zu erzeugen. Falls kein Kreuzschliff gefordert wird, könnte der dritte Hub auch entfallen. Die Drehzahlen für alle Teiloperationen (Durchmessererzeugung, Entgraten und gegebenenfalls Honwinkelerzeugung) können separat eingestellt werden.

Die zunächst widersinnig erscheinende Aufteilung des Entgratens auf zwei aufeinanderfolgende Bearbeitungsoperationen (Zwischenhonen mit Entgraten des spindelfernen Endes, Fertighonen mit Entgraten des spindelzugewandten Endes) schafft die Voraussetzung für erhebliche Bearbeitungszeitreduktionen für den Gesamtprozess, so dass pro Zeiteinheit mehr Werkstücke bearbeitet werden können als im Stand der Technik. - - - - - - -- - - - - - -

## Patentansprüche

1. Kombinationswerkzeug zum Honen und Entgraten einer Bohrung, insbesondere zum Honen und Entgraten eines Pleuelauges in einem Pleuel, umfassend:
einen Werkzeugkörper (110), der eine Werkzeugachse (112) definiert, Kupplungsstrukturen (120) zur Ankopplung des Werkzeugkörpers an eine Arbeitsspindel oder ein Antriebselement einer Bearbeitungsmaschine, wobei die Kupplungsstrukturen an einem spindelseitigen Ende des Werkzeugkörpers (110) angeordnet sind;
eine in dem Werkzeugkörper (110) parallel zur Werkzeugachse (112) verlaufenden Führungsöffnung (114) zur Aufnahme und Führung eines parallel zur Werkzeugachse (112) verschiebbaren Zustellelements (190);
einen Honabschnitt (130) mit mehreren von der Führungsöffnung (190) radial zur Werkzeugachse (112) durchgehenden Durchbrechungen (116) zur Aufnahme jeweils einer Honleisteneinheit (180), die mit dem Zustellelement (190) in Wirkverbindung steht und durch axiale Verschiebung des Zustellelements (190) radial zur Werkzeugachse (112) zustellbar ist;
einen gegenüber dem Honabschnitt axial versetzt angeordneten Entgratabschnitt (200), in dem wenigstens ein individuell bewegliches und radial zur Werkzeugachse (112) federnd gelagertes Schneidsegment (220) angeordnet ist,
**dadurch gekennzeichnet, dass**
im Entgratabschnitt (200) für jedes Schneidsegment im Werkzeugkörper (110) eine individuelle Aufnahmetasche (230) mit einer der Führungsöffnung (114) zugewandten Bodenfläche (255) und Seitenflächen (222) ausgebildet ist und jedes der Schneidsegmente in einer individuellen Aufnahmetasche (230) im Werkzeugkörper (110) aufgenommen ist.

2. Kombinationswerkzeug nach Anspruch 1, **dadurch gekennzeichnet, dass** in dem Entgratabschnitt (200) mehrere, vorzugsweise gleichmäßig über den Umfang des Kombinationswerkzeugs verteilte Schneidsegmente (220) angeordnet sind.

3. Kombinationswerkzeug nach Anspruch 1 oder 2, **dadurch gekennzeichnet, dass** zwei in Umfangsrichtung des Werkzeugkörpers gegenüberliegende Seitenflächen (222-U1, 222-U2) der Aufnahmetasche (230) als Führungsflächen für eine Radialbewegung des Schneidsegments (220) ausgelegt sind, an dem Schneidsegment an gegenüberliegenden Seiten zwei korrespondierende Führungsflächen (242) ausgebildet sind und eine zwischen den Führungsflächen der Aufnahmetasche gemessene lichte Weite der Aufnahmetasche (230) im Wesentlichen einer zwischen den Führungsflächen (242) des Schneidsegments gemessenen Breite des Schneidsegments entspricht.

4. Kombinationswerkzeug nach Anspruch 1 oder 2, **dadurch gekennzeichnet, dass** oder dass zwei in Axialrichtung des Werkzeugkörpers gegenüberliegende Seitenflächen (222-A1, 222-A2) der Aufnahmetasche (230) als Führungsflächen für eine Radialbewegung des Schneidsegment (220) ausgelegt sind, an dem Schneidsegment an gegenüberliegenden Seiten zwei korrespondierende Führungsflächen (243) ausgebildet sind und eine zwischen den Führungsflächen der Aufnahmetasche gemessene lichte Weite der Aufnahmetasche im Wesentlichen einer zwischen den Führungsflächen (243) des Schneidsegments gemessenen Länge des Schneidsegments entspricht.

5. Kombinationswerkzeug nach Anspruch 1, 2 oder 3, **dadurch gekennzeichnet, dass** eine axiale Länge der Aufnahmetasche (230) größer ist als eine axiale Länge des Schneidsegments, so dass das Schneidsegment innerhalb der Aufnahmetasche axial beweglich ist.

6. Kombinationswerkzeug nach einem der vorhergehenden Ansprüche, **gekennzeichnet durch** mindestens eine in Radialrichtung wirkende Feder (257) zum Erzeugen einer in Radialrichtung nach außen auf das Schneidsegment (220) wirkenden Federkraft, wobei vorzugsweise zwischen der Bodenfläche (225) und dem Schneidsegment mindestens eine Druckfeder angeordnet ist und/oder dass an einer der Schneidfläche abgewandten Unterseite eines Schneidsegments (220) wenigstens eine sacklochförmige Federaufnahme (256) zur Aufnahme einer Schraubendruckfeder (257) ausgebildet ist, wobei vorzugsweise mehrere, insbesondere zwei Federaufnahmen vorgesehen sind.

7. Kombinationswerkzeug nach einem der vorhergehenden Ansprüche, **dadurch gekennzeichnet, dass** jeder Aufnahmetasche (230) wenigstens ein an dem Werkzeugkörper (110) lösbar befestigbares Sicherungselement (260. 460) zur Sicherung eines in der Aufnahmetasche (230) aufgenommenen Schneidsegments gegen Herausfallen aus der Aufnahmetasche zugeordnet ist, wobei vorzugsweise das Sicherungselement als Halteplatte (260) ausgebildet ist, die einen Rahmen bildet, welcher eine Durchlassöffnung (262) für einen Außenabschnitt (250) des Schneidsegments (230) umschließt, wobei vorzugsweise im Rahmen wenigstens eine Durchgangsöffnung zum Hindurchführen einer Befestigungsschraube (229) angeordnet ist oder dass mindestens eine, vorzugsweise zwei ringförmig umlaufende Rückholfedern vorgesehen sind, die vorzugsweise in Umfangsnuten im Werkzeugkörper eingesetzt sind und an den Schneidsegmenten angreifen.

8. Kombinationswerkzeug nach einem der vorhergehenden Ansprüche, **dadurch gekennzeichnet, dass** ein Schneidsegment (220) in einem bodennahen Bereich eine Führungsabschnitt (240) mit seitlichen Führungsflächen (242, 243) zur Führung von Bewegungen in der Aufnahmetasche und einen im Querschnitt schmaleren Außenabschnitt (250) aufweist, der an einer bodenfernen Außenseite die Schneidfläche (255) aufweist, wobei der Führungsabschnitt unter Bildung einer Stufe (235) in den Schneidabschnitt übergeht.

9. Kombinationswerkzeug nach einem der vorhergehenden Ansprüche, **dadurch gekennzeichnet, dass** in dem Entgratabschnitt (200) drei, vier, fünf oder sechs Schneidsegmente (220) angeordnet sind, die jeweils einen Umfangswinkelbereich abdecken, wobei vorzugsweise drei oder vier gleichmäßig um den Umfang verteilte Schneidsegmente vorgesehen sind, die jeweils einen Umfangswinkelbereich von 30° bis 60° abdecken.

10. Kombinationswerkzeug nach einem der vorhergehenden Ansprüche, **dadurch gekennzeichnet, dass** die Schneidsegmente Schneidflächen (255) mit geometrisch unbestimmten Schneiden aufweisen, wobei die Schneidflächen vorzugsweise Diamantkörner in einer galvanisch aufgebrachten metallischen Bindung aufweisen.

11. Kombinationswerkzeug nach einem der vorhergehenden Ansprüche, **dadurch gekennzeichnet, dass** die Schneidsegmente (220) an ihrer radialen Außenseite wenigstens eine in Umfangsrichtung gekrümmte und schräg zur Werkzeugachse orientierte Schneidfläche (255) mit geometrisch unbestimmten Schneiden sowie daran anschließend eine im Wesentlichen zylindrisch gekrümmte, vorzugsweise nicht schneidende, Führungsfläche (252) aufweist, wobei vorzugsweise die radiale Außenfläche des Schneidsegments in drei Abschnitte unterteilt ist, wobei sich in einem mittleren Abschnitt die Führungsfläche (252) befindet und auf jeder Seite der Führungsfläche eine in Breitenrichtung des Schneidsegments gekrümmte Schneidfläche (255) mit geometrisch unbestimmten Schneiden angeordnet ist, die schräg zur Werkzeugachse und/oder zur Bodenfläche des Schneidsegments orientiert ist.

12. Feinbearbeitungsverfahren zum Honen und Entgraten einer Bohrung, insbesondere zum Honen und Entgraten eines Pleuelauges in einem Pleuel, umfassend:
Vorhonen einer vorbearbeiteten Bohrung in mindestens einer Vorhonoperation zur Erzeugung einer vorgehonten Bohrung;
Zwischenhonen der vorgehonten Bohrung in einer Zwischenhonoperation;
Fertighonen der zwischengehonten Bohrung in einer Fertighonoperation;
Entgraten eines ersten Bohrungsrandes an einer Werkzeugaustrittsseite in einer ersten Entgratoperation,
Entgraten eines zweiten Bohrungsrandes an einer Werkzeugeintrittsseite in einer zweiten Entgratoperation;
**dadurch gekennzeichnet, dass**
die erste Entgratoperation nach dem Vorhonen und vor dem Fertighonen und die zweite Entgratoperation nach dem Fertighonen durchgeführt wird.

13. Feinbearbeitungsverfahren nach Anspruch 12, **dadurch gekennzeichnet, dass** die erste Entgratoperation nach dem Zwischenhonen und vor dem Fertighonen und die zweite Entgratoperation nach dem Fertighonen durchgeführt wird.

14. Feinbearbeitungsverfahren nach Anspruch 12 oder 13, **dadurch gekennzeichnet, dass** die Zwischenhonoperation und die erste Entgratoperation ohne zwischenzeitlichen Werkzeugwechsel mit einem ersten Kombinationswerkzeug durchgeführt werden, das einen Honabschnitt und einen ersten Entgratabschnitt aufweist, welcher axial versetzt an einer spindelabgewanden Seite des Honabschnitts angeordnet ist und/oder dass die Fertighonoperation und die zweite Entgratoperation ohne zwischenzeitlichen Werkzeugwechsel mit einem zweiten Kombinationswerkzeug durchgeführt werden, das einen Honabschnitt und einen zweiten Entgratabschnitt aufweist, welcher axial versetzt an einer spindelzugewanden Seite des Honabschnitts angeordnet ist.

15. Feinbearbeitungsverfahren nach einem der Ansprüche 12 bis 14, **dadurch gekennzeichnet, dass** zum Zwischenhonen und/oder zum Fertighonen ein Kombinationswerkzeug gemäß einem der Ansprüche 1 bis 11 verwendet wird.
